# EUROPEAN PATENT SPECIFICATION

(11) **EP 2 460 848 B1**
(45) Date of publication and mention of the grant of the patent: **05.09.2018**
(21) Application number: 10804259.9
(22) Date of filing: 14.07.2010
(51) Int. Cl.: B60C 1/00, C08K 3/36, C08K 5/09, C08K 5/548, C08K 5/098

(54) **FILLER FOR USE IN RUBBER AND RUBBER COMPOSITION**
FÜLLSTOFF ZUR VERWENDUNG IN KAUTSCHUK UND KAUTSCHUKZUSAMMENSETZUNG
CHARGE DESTINÉE À ÊTRE UTILISÉE DANS DU CAOUTCHOUC ET COMPOSITION DE CAOUTCHOUC

(30) Priority: 31.07.2009 JP 2009180040
(43) Date of publication of application: 06.06.2012
(73) Proprietor: Osaka Soda Co., Ltd., Nishi-ku Osaka-shi, Osaka 550-0011 (JP)
(72) Inventor: ICHINO,Tomoyuki, Osaka-shi Osaka 550-0011 (JP); YAMADA,Nobuo, Osaka-shi Osaka 550-0011 (JP); NAKAMURA,Shoukichi, Osaka-shi Osaka 550-0011 (JP)
(74) Representative: Sajda, Wolf E.
(86) International application number: PCT/JP2010/061905
(87) International publication number: WO 2011/013513

(56) References cited:
- WO-A1-2011/062099
- JP-A- 11 071 479
- JP-A- 2000 290 431
- JP-A- 2002 275 311
- JP-A- 2002 327 091
- JP-A- 2005 298 435
- JP-A- 2007 169 559
- JP-A- 2007 321 040
- US-A- 5 534 578
- US-A- 5 534 578
- DATABASE CA [Online] CHEMICAL ABSTRACTS SERVICE, COLUMBUS, OHIO, US; 13 December 2007 (2007-12-13), MINAGAWA, YASUHISA: "Reversion- and heat-aging-resistant epoxidized natural rubber compositions for tires, and tires comprising them", XP002734267, retrieved from STN Database accession no. 2007:1415477 -& JP 2007 321040 A (SUMITOMO RUBBER IND) 13 December 2007 (2007-12-13)
- DATABASE CA [Online] CHEMICAL ABSTRACTS SERVICE, COLUMBUS, OHIO, US; 22 October 2007 (2007-10-22), KAVUN, S. M. ET AL: "Curable diene rubber compounds for low-hysteresis tire treads with improved road tracking and wear resistance", XP002734268, retrieved from STN Database accession no. 2007:1184889 & RU 2 308 469 C1 (KAVUN SEMEN MOISEEVICH [RU]; AZAROVA JULIJA VIKTOROVNA [RU]; KOSSO RAI) 20 October 2007 (2007-10-20)

## Description

### TECHNICAL FIELD

The invention relates to a filler composition for rubber obtained by the addition of a lactic acid.

### BACKGROUND ART

In recent years, silica-containing tires, which can provide high fuel efficiency and high braking performance, are rapidly becoming widespread. Unfortunately, the addition of silica considerably increases the viscosity of the rubber composition, and therefore, a silane coupling agent is added to reduce the increase in viscosity. It is also known that such a silane coupling agent reacts with silanol groups on the surface of silica to reduce the interaction between silica particles and to lower the loss tangent and dynamic elastic modulus of rubber.

However, the rate of the reaction between silica and the silane coupling agent is very low, and a kneading process at high temperature or two or more kneading processes are necessary for a sufficient reaction between them. A high-temperature kneading process is not preferred because it can cause gelation of rubber to make the processing impossible. Two or more kneading processes are complicated although there is no problem of rubber gelation.

To solve the above problems, a coupling agent having high reactivity with silica and considered to be capable of providing good processability is proposed, but such a coupling agent has many practical problems in terms of cost effectiveness, etc.

Various techniques such as addition of an organosilane or boric acid have been attempted to accelerate the reaction between silica and a silane coupling agent. Unfortunately, such an additive has a problem such as a need for an expensive raw silane material or the use of highly-toxic boric acid (see Patent Documents 1 and 2).

Patent Document 3 discloses an attempt to directly pre-treat wet silica with a silane coupling agent so that a rubber composition with good crosslinking properties can be obtained. This method achieves some positive results but has some problems in terms of cost effectiveness and handling, such as the use of an alkoxytitanium catalyst having high reactivity with water.

### PRIOR ART DOCUMENTS

### Patent Documents

Patent Document 1: Japanese Patent Application Laid-Open JP-A-2005-002 065
Patent Document 2: JP-A-2007-077 322
Patent Document 3: JP-A-2006-249 387

### SUMMARY OF THE INVENTION

### PROBLEMS TO BE SOLVED BY THE INVENTION

In view of the above, an object of the invention is to provide: a filler composition capable of imparting good dynamic characteristics to rubber; a filler obtained by reaction of such a filler composition; a rubber composition containing such a filler; and a crosslinking reaction product thereof.

### MEANS FOR SOLVING THE PROBLEMS

As a result of earnest studies to solve the above problems, the inventors have found that lactic acid, which has one hydroxyl group and one carboxyl group per molecule, can particularly accelerate the reaction between a silica-based filler and a silane coupling agent and that the object can be achieved by a filler composition containing a silica-based filler, a silane coupling agent, and lactic acid ; a filler obtained by reaction of the filler composition; a rubber composition containing the filler; and the crosslinking reaction product thereof; or a composition containing a diene rubber, a silica-based filler, a silane coupling agent, and lactic acid ; and a crosslinking reaction product thereof.

Specifically, the invention is directed to a filler composition for rubber containing 100 parts by weight of a silica-based filler, 2 to 25 parts by weight of a silane coupling agent, and 0.1 to 10 parts by weight of lactic acid.

In the filler composition for rubber of the invention, the hydroxy acid and/or the hydroxy acid salt is preferably an aliphatic hydroxy acid of 2 to 18 carbon atoms and/or a salt of an aliphatic hydroxy acid of 2 to 18 carbon atoms or an aromatic hydroxy acid of 7 to 18 carbon atoms and/or a salt of an aromatic hydroxy acid of 7 to 18 carbon atoms. A hydroxy acid having carboxyl and hydroxyl groups bonded to the same carbon atom or adjacent carbon atoms is particularly preferred.

In the filler composition for rubber of the invention, the silane coupling agent is preferably a polysulfide silane coupling agent represented by Formula [I]:
Formula 1

(R¹-O)₃-_{Y}R¹_{Y}-Si-R²-Sₓ-R²-Si-R¹_{Y}(O-R¹)_{3-Y} .... [I],

wherein R¹ is a monovalent hydrocarbon group of 1 to 18 carbon atoms, R² is a divalent hydrocarbon group of 1 to 9 carbon atoms, X is from 2 to 6, and Y is an integer of 0, 1, or 2.

The filler composition for rubber of the invention preferably contains 0.5 to 2.0 mole equivalents of a basic material per mole equivalent of the carboxyl group in the hydroxy acid.

In the filler composition for rubber of the invention, the silica-based filler is preferably wet silica with a BET specific surface area of 20 to 250 m²/g, and the wet silica preferably has an apparent particle size of 100 µm or less. The silica-based filler preferably has a water content of 4 % by weight or less, and the silica-based filler may have previously undergone a heat treatment.

The filler composition for rubber of the invention is preferably obtained by reaction between the silica-based filler and the coupling agent in the above filler composition for rubber.

The rubber composition of the invention preferably contains 100 parts by weight of a diene rubber and 5 to 120 parts by weight of the above filler.

Disclosed is a silica-containing rubber composition containing 100 parts by weight of a diene rubber, 10 to 120 parts by weight of a silica-based filler, 0.5 to 20 parts by weight of a silane coupling agent, and 0.1 to 10 parts by weight of a hydroxy acid and/or a hydroxy acid salt.

In the silica-containing rubber composition, the hydroxy acid and/or the hydroxy acid salt is preferably an aliphatic hydroxy acid of 2 to 18 carbon atoms and/or a salt of an aliphatic hydroxy acid of 2 to 18 carbon atoms or an aromatic hydroxy acid of 7 to 18 carbon atoms and/or a salt of an aromatic hydroxy acid of 7 to 18 carbon atoms.

In the silica-containing rubber composition, the silane coupling agent is preferably a polysulfide silane coupling agent represented by Formula [I]:
Formula 2

(R¹-O)_{3-Y}R¹_{Y}-Si-R²-Sₓ-R²-Si-R¹_{Y}(O-R¹)_{3-Y} ...... [I],

wherein R¹ is a monovalent hydrocarbon group of 1 to 18 carbon atoms, R² is a divalent hydrocarbon group of 1 to 9 carbon atoms, X is from 2 to 6, and Y is an integer of 0, 1, or 2.

The crosslinkable rubber composition of the invention preferably contains the above rubber composition and a crosslinking agent.

The crosslinked product of the invention preferably includes a crosslinking reaction product of the crosslinkable rubber composition.

The tire of the invention preferably includes the crosslinked product.

The rubber vibration isolator of the invention preferably includes the crosslinked product.

### EFFECTS OF THE INVENTION

In the composition containing a silica-based filler, a silane coupling agent, and lactic acid, the silica-based filler and the coupling agent can react efficiently, so that the time required to treat the surface of the silica-based filler with the coupling agent can be reduced, which makes it easy to obtain a rubber filler.

In the composition containing a diene rubber, a silica-based filler, a silane coupling agent, and lactic acid, the silica-based filler and the silane coupling agent in the diene rubber mixture are allowed to react efficiently by kneading, so that a sufficient coupling effect is obtained only by a single kneading process.

Since the silica-based filler and the silane coupling agent react efficiently, the crosslinked product obtained according to the invention exhibits dynamic characteristics, in other word, a low loss tangent (tan δ).

### EMBODIMENTS FOR CARRYING OUT THE INVENTION

First, the filler composition for rubber, the filler obtained from the filler composition for rubber, and the rubber composition containing the filler are described in detail.

### Filler composition for rubber

The filler composition for rubber of the invention, which corresponds to a composition not undergoing a reaction between a silica-based filler and a silane coupling agent, contains at least a silica-based filler, a silane coupling agent, lactic acid.

### Silica-Based Filler

While the silica-based filler for use in an embodiment of the invention may be clay, mica, dry silica, or the like, it is preferably wet silica with a BET specific surface area of 20 to 250 m²/g, more preferably wet silica with a BET specific surface area of 50 to 200 m²/g. The specific surface area is preferably in the range of 20 m²/g to 250 m²/g, because in this range, sufficient reinforcing properties can be obtained for rubber, and the reactivity with the silane coupling agent will be good.

In an embodiment of the invention, commercially available silica may be used, examples of which include Nipsil VN-3, AQ, ER, and E743 manufactured by Tosoh Silica Corporation, TOKUSIL 255, UR, GU, and 233 manufactured by Tokuyama Corporation, and ULTRASIL VN3 and VN2 manufactured by Degussa AG.

The apparent particle size of the silica-based filler corresponds to an average particle size, which may be measured using a sieve(s) or a particle counter (Elzone 280 PC, manufactured by Particle Data Inc.). Small particles with an average particle size of about 10 µm can be measured using a particle counter, while large particles with an average particle size of around 100 µm are measured advantageously using a sieve or sieves.

The apparent particle size of the silica-based filler is preferably 100 µm or less, more preferably 80 µm or less. When the apparent particle size is 100 µm or less, silanol groups on the surface of the silica-based filler can be sufficiently subjected to the treatment process while the silica-based filler particles are prevented from aggregating, which is preferred.

The water content (% by weight) of the silica-based filler is not restricted as long as the effect of accelerating the reaction between silica and the silane coupling agent, an advantageous effect of the invention, is not impaired. In a significant feature of the invention (the first filler composition for rubber), however, since silica and the coupling agent have already reacted, so that desired physical properties can be presented without heating during kneading.

From this point of view, if the water content is too high and if kneading is performed without heating, vaporization of water may cause blisters (bubbles in rubber) during vulcanization of the rubber composition containing the rubber filler described below. In this case, the vulcanized product may have lowered quality.

Therefore, the water content is preferably 4 % by weight or less, more preferably 2 % by weight or less. A heat treatment may also be performed to reduce the water content to 4 % by weight or less.

The water content (% by weight) of the silica-based filler can be determined from the weight loss before and after heating. For example, a commercial moisture analyzer (such as Electronic Moisture Analyzer Model MA45, manufactured by SARTORIUS K.K.) may be used, and the A method described in JIS K 6218-1:2005 may be applied.

### Silane Coupling Agent

Examples of the silane coupling agent for use in an embodiment of the invention include, but are not limited to, vinyl silanes, amino silanes, epoxy silanes, and methacryloxysilanes. In particular, (poly)sulfide silanes and mercaptosilanes are preferred.

Specific examples include, but are not limited to, CABRUS 2A, CABRUS 2B, and CABRUS 4 manufactured by DAISO CO., LTD., Si-75, Si-69, and Si-363 manufactured by Degussa AG, A-1289, NXT, NXT-LowV, and A-189 manufactured by Momentive Performance Materials Inc., and KBE-846 manufactured by Shin-Etsu Chemical Co., Ltd.

These may be used alone or in any combination. A polysulfide silane coupling agent represented by Formula [I] is more preferred, and bis(3-triethoxysilylpropyl)disulfide (TESPD for short) or bis(3-triethoxysilylpropyl)tetrasulfide (TESPT for short) is particularly preferred.
Formula 3:

(R¹-O)_{3-Y}R¹_{Y}-Si-R²-Sₓ-R²-Si-R¹_{Y}(O-R¹)_{3-Y} ... [I],

wherein R¹ is a monovalent hydrocarbon group of 1 to 18 carbon atoms, R² is a divalent hydrocarbon group of 1 to 9 carbon atoms, X is from 2 to 6, and Y is an integer of 0, 1, or 2.

The amount of the silane coupling agent in the composition is from 2 to 25 parts by weight, preferably from 5 to 20 parts by weight, based on 100 parts by weight of the silica-based filler. The range of 2 to 25 parts by weight is preferred because in this range, the effect of the silane coupling agent is sufficiently obtained with no degradation in compression set properties or other properties.

### Hydroxy Acid and/or Hydroxy Acid Salt

Any hydroxy acid and/or any hydroxy acid salt may be used in an embodiment of the invention, as long as it can accelerate the reaction between the silica-based filler and the silane coupling agent. More specifically, a compound having at least one carboxyl group and at least one hydroxyl group per molecule and/or a salt thereof (such as a sodium salt, a calcium salt, or a zinc salt) may be used, which may have an aliphatic or aromatic main chain.

Preferred is an aliphatic hydroxy acid of 2 to 18 carbon atoms and/or a salt of an aliphatic hydroxy acid of 2 to 18 carbon atoms or an aromatic hydroxy acid of 7 to 18 carbon atoms and/or a salt of an aromatic hydroxy acid of 7 to 18 carbon atoms. More preferred is an aliphatic hydroxy acid of 2 to 12 carbon atoms and/or a salt of an aliphatic hydroxy acid of 2 to 12 carbon atoms or an aromatic hydroxy acid of 7 to 12 carbon atoms and/or a salt of an aromatic hydroxy acid of 7 to 12 carbon atoms. A hydroxy acid having carboxyl and hydroxyl groups bonded to the same carbon atom or adjacent carbon atoms and/or a salt thereof is particularly preferred.

Examples include, but are not limited to, a saturated or unsaturated aliphatic hydroxy acid such as lactic acid, citric acid, isocitric acid, malic acid, tartaric acid, ricinoleic acid, or hydroxystearic acid and an aromatic hydroxy acid such as salicylic acid, mandelic acid, creosote acid, or coumaric acid.

Salts thereof may also be used, examples of which include, but are not limited to, a salt of a saturated or unsaturated aliphatic hydroxy acid, such as sodium lactate, zinc lactate, calcium lactate, sodium citrate, anhydrous citric acid, or potassium tartrate and a salt of an aromatic hydroxy acid, such as sodium salicylate.

The hydroxy acid and/or the hydroxy acid salt for use in an embodiment of the invention is lactic acid or preferably salicylic acid, and/or a salt thereof, more preferably racemic lactic acid and/or lactate in view of physical properties and cost effectiveness.

The amount of lactic acid or the hydroxy acid and/or the hydroxy acid salt in the composition is from 0.1 to 10 parts by weight, preferably from 0.1 to 5 parts by weight, based on 100 parts by weight of the silica-based filler. The range of 0.1 to 10 parts by weight is preferred because in this range, the effect of accelerating the reaction between the silica-based filler and the silane coupling agent can be obtained.

In an embodiment of the invention, a basic component may be added to neutralize the hydroxy acid in the filler, if the rate of crosslinking of the rubber composition varies with pH, if a shift of the pH of the mixture system (raw material) to the acid side is not preferred, or if any change in the pH of the raw material filler is not desired. Examples of the basic component include, but are not limited to, sodium hydroxide, potassium hydroxide, calcium hydroxide, calcium carbonate, and zinc oxide (zinc white).

The basic component is preferably used in an amount in the range of 0.5 to 2.0 mole equivalents, more preferably 0.8 to 1.2 mole equivalents, per mole equivalent of the carboxyl group in the hydroxy acid.

### Rubber Filler

The rubber filler of the invention can be obtained by reaction between the silica-based filler and the silane coupling agent in the filler composition for rubber containing the silica-based filler, the silane coupling agent, and the hydroxy acid and/or the hydroxy acid salt, and optionally the alkaline component.

### Method for Producing Rubber Filler

The method for producing the rubber filler of the invention may include performing a heat treatment to accelerate the reaction between the silica and the coupling agent, in which the heating method, time, temperature, and so on are not restricted. Specifically, an exemplary method may include performing heating and stirring with a nauta mixer, a ribbon blender, a henschel mixer, or the like, and then heating the composition with a heating oven or the like. The temperature and time of the heating and stirring are generally 40 °C to 200 °C and 1 minute to 24 hours.

In the production of the filler of the invention, the silica filler, the coupling agent, and various additives may be added in any order. The process preferably includes adding the hydroxy acid and/or the hydroxy acid salt and the silane coupling agent to the silica filler and, if necessary, independently adding the basic material. The process more preferably includes adding the hydroxy acid and/or the hydroxy acid salt and the silane coupling agent independently to the silica filler and then adding the basic material.

When the hydroxy acid and/or the hydroxy acid salt is a solid, the step of adding the hydroxy acid and/or the hydroxy acid salt preferably includes dissolving the hydroxy acid and/or the hydroxy acid salt in a solvent so that dispersibility can be improved, and then adding the solution. Examples of the solvent include, but are not limited to, an alcohol such as ethanol, acetone, toluene, and water.

### Rubber Composition Containing Rubber Filler

The rubber composition containing the rubber filler and a rubber component is described below.

Examples of the rubber component for use in an embodiment of the invention include diene rubbers such as natural rubber, butadiene rubber, styrene-butadiene rubber, ethylene-propylene terpolymer, butyl rubber, acrylonitrile-butadiene rubber, and chloroprene rubber. One of these diene rubbers may be used, or two or more of these diene rubbers may be used in a blend.

The amount of the rubber filler in the composition is preferably from 5 to 120 parts by weight, more preferably from 10 to 110 parts by weight, in particular, preferably from 20 to 100 parts by weight, based on 100 parts by weight of the diene rubber. If it is less than 5 parts by weight, the filler cannot exhibit sufficient reinforcing properties, and if it is more than 120 parts by weight, the filler will provide high viscosity to degrade processability.

A crosslinking agent is used in the rubber composition containing the rubber filler of the invention. Examples of the crosslinking agent include, but are not limited to, vulcanizing agents such as sulfur, peroxides, thiurams, and oximes. The amount of the crosslinking agent in the composition is preferably from 0.1 to 10 parts by weight, more preferably from 0.1 to 5 parts by weight, based on 100 parts by weight of the diene rubber.

In addition to the above components, additives commonly used in rubber industry may be used to form the rubber composition containing the rubber filler according to the invention, as long as the composition does not depart from the drift of the invention. For example, a vulcanization accelerator, a processing aid, an antioxidant, a filler, a reinforcing agent, a softening agent, a plasticizer, etc. may be used.

A further disclosed silica-containing rubber composition will be described in detail. It should be noted that the silica-containing rubber composition is different from the rubber composition containing the rubber filler in that silica and a silane coupling agent remaining unreacted are mixed with a diene rubber in the silica-containing rubber composition.

### Silica-Containing Rubber Composition

The silica-containing rubber composition contains at least a diene rubber, a silica-based filler, a silane coupling agent, and a hydroxy acid and/or a hydroxy acid salt.

### Diene Rubber

Examples of the diene rubber used in the silica-containing rubber composition include natural rubber, butadiene rubber, styrene-butadiene rubber, ethylene-propylene terpolymer, butyl rubber, acrylonitrile-butadiene rubber, and chloroprene rubber. One of these diene rubbers may be used, or two or more of these diene rubbers may be used in a blend.

### Silica-Based Filler

The silica-based filler used in the silica-containing rubber composition is preferably wet silica with a BET specific surface area of
20 to 250 m²/g, more preferably wet silica with a BET specific surface area of 50 to 200 m²/g. The specific surface area is preferably in the range of 20 m²/g to 250 m²/g, because in this range, sufficient reinforcing properties can be obtained for rubber, and the reactivity with the silane coupling agent will be good.

Commercially available silica may be used as such silica, examples of which include Nipsil VN-3, AQ, ER, and E743 manufactured by Tosoh Silica Corporation, TOKUSIL 255, UR, GU, and 233 manufactured by Tokuyama Corporation, and ULTRASIL VN3 and VN2 manufactured by Degussa AG.

The amount of the silica-based filler in the composition is preferably from 10 to 120 parts by weight, more preferably from 10 to 110 parts by weight, in particular, preferably from 20 to 100 parts by weight, based on 100 parts by weight of the diene rubber. If it is less than 10 parts by weight, the filler cannot exhibit sufficient reinforcing properties, and if it is more than 120 parts by weight, the filler will provide high viscosity to degrade processability.

This minimum amount differs from that of the first filler composition for rubber because the reinforcing properties of silica in this composition are generally lower than those in the first filler composition for rubber.

Specifically, it is because due to the presence of silanol groups on the silica surface, silica generally has low compatibility with rubber (low affinity for rubber), so that its reinforcing properties may be low. It is also considered that silica (surface-treated silica) obtained by the reaction between the silane coupling agent and silica is reduced in the number of silanol groups so that it has improved compatibility with rubber, and accordingly has high reinforcing properties.

### Silane Coupling Agent

Examples of the silane coupling agent used in the silica-containing rubber composition include, but are not limited to, vinyl silanes, amino silanes, epoxy silanes, and methacryloxysilanes. In particular, (poly)sulfide silanes and mercaptosilanes are preferred.

Specific examples include, but are not limited to, CABRUS 2A, CABRUS 2B, and CABRUS 4 manufactured by DAISO CO., LTD., Si-75, Si-69, and Si-363 manufactured by Degussa AG, A-1289, NXT, NXT-LowV, and A-189 manufactured by Momentive Performance Materials Inc., and KBE-846 manufactured by Shin-Etsu Chemical Co., Ltd. These may be used alone or in any combination. A polysulfide silane coupling agent represented by Formula [I] is particularly preferred, and bis(3-triethoxysilylpropyl)disulfide (TESPD for short) or bis(3-triethoxysilylpropyl)tetrasulfide (TESPT for short) is particularly preferred.
Formula 4:

(R¹-O)_{3-Y}R¹_{Y}-Si-R²-Sₓ-R²-Si-R¹_{Y}(O-R¹)_{3-Y} [I],

wherein R¹ is a monovalent hydrocarbon group of 1 to 18 carbon atoms,
R² is a divalent hydrocarbon group of 1 to 9 carbon atoms, X is from 2 to 6, and
Y is an integer of 0, 1, or 2.

The amount of the silane coupling agent in the composition is from 0.5 to 20 parts by weight, preferably from 1 to 12 parts by weight, based on 100 parts by weight of the diene rubber. The range of 0.5 to 20 parts by weight is preferred because in this range, the effect of the silane coupling agent is sufficiently obtained with no degradation in compression set properties or other properties.

### Hydroxy Acid and/or Hydroxy Acid Salt

Any hydroxy acid and/or any hydroxy acid salt may be used in the silica-containing rubber composition, as long as it can accelerate the reaction between the silica-based filler and the silane coupling agent. More specifically, a compound having at least one carboxyl group and at least one hydroxyl group per molecule and/or a salt thereof (such as a sodium salt, a calcium salt, or a zinc salt) may be used, which may have an aliphatic or aromatic main chain.

Preferred is an aliphatic hydroxy acid of 2 to 18 carbon atoms and/or a salt of an aliphatic hydroxy acid of 2 to 18 carbon atoms or an aromatic hydroxy acid of 7 to 18 carbon atoms and/or a salt of an aromatic hydroxy acid of 7 to 18 carbon atoms. More preferred is an aliphatic hydroxy acid of 2 to 12 carbon atoms and/or a salt of an aliphatic hydroxy acid of 2 to 12 carbon atoms or an aromatic hydroxy acid of 7 to 12 carbon atoms and/or a salt of an aromatic hydroxy acid of 7 to 12 carbon atoms. A hydroxy acid having carboxyl and hydroxyl groups bonded to the same carbon atom or adjacent carbon atoms is particularly preferred.

Examples include, but are not limited to, a saturated or unsaturated aliphatic hydroxy acid such as lactic acid, citric acid, isocitric acid, malic acid, tartaric acid, ricinoleic acid, or hydroxystearic acid and an aromatic hydroxy acid such as salicylic acid, mandelic acid, creosote acid, or coumaric acid.

Salts thereof may also be used, examples of which include, but are not limited to, a salt of a saturated or unsaturated aliphatic hydroxy acid, such as sodium lactate, zinc lactate, calcium lactate, sodium citrate, anhydrous citric acid, or potassium tartrate and a salt of an aromatic hydroxy acid, such as sodium salicylate.

The hydroxy acid and/or the hydroxy acid is preferably lactic acid, salicylic acid, and/or a salt thereof, more preferably racemic lactic acid and/or lactate in view of physical properties and cost effectiveness.

The amount of the hydroxy acid and/or the hydroxy acid salt in the composition is from 0.1 to 10 parts by weight, preferably from 0.1 to 5 parts by weight, based on 100 parts by weight of the diene rubber. The range of 0.1 to 10 parts by weight is preferred because in this range, the effect of accelerating the reaction between the silica-based filler and the silane coupling agent can be obtained.

A basic component may be added to neutralize the hydroxy acid in the filler, if the rate of crosslinking of the silica-containing rubber composition varies with pH, if a shift of the pH of the mixture system (raw material) to the acid side is not preferred, or if any change in the pH of the raw material filler is not desired. Examples of the basic component include, but are not limited to, sodium hydroxide, potassium hydroxide, calcium hydroxide, calcium carbonate, and zinc oxide (zinc white).

The basic component is preferably used in an amount in the range of 0.5 to 2.0 mole equivalents, more preferably 0.8 to 1.2 mole equivalents, per mole equivalent of the carboxyl group in the hydroxy acid.

A crosslinking agent may be used in the silica-containing rubber composition. Examples of the crosslinking agent include, but are not limited to, vulcanizing agents such as sulfur, peroxides, thiurams, and oximes. The amount of the crosslinking agent in the composition is preferably from 0.1 to 10 parts by weight, more preferably from 0.1 to 5 parts by weight, based on 100 parts by weight of the diene rubber.

In addition to the above components, additives commonly used in rubber industry may be used to form the silica-containing rubber composition, as long as the composition does not depart from the drift of the invention. For example, a vulcanization accelerator, a processing aid, an antioxidant, a filler, a reinforcing agent, a softening agent, a plasticizer, etc. may be used.

### Method for Producing Rubber Composition Containing the Rubber Filler

The method for producing the rubber composition containing the rubber filler of the invention preferably includes kneading at 10 to 250 °C, more preferably kneading at 30 °C to 180 °C. The kneading time is typically, but not limited to, 1 minute to 1 hour.

### Method for Producing the Silica-Containing Rubber Composition

The method for producing the silica-containing rubber preferably includes kneading at 80 to 200 °C, more preferably kneading at 100 to 180 °C. The kneading time is typically, but not limited to,
1 minute to 1 hour.

### Method for Producing Crosslinkable Rubber Composition

The crosslinkable rubber composition of the invention is preferably produced by adding the crosslinking agent to the rubber composition containing the rubber filler or the silica-containing rubber composition and kneading the mixture at 100 °C or lower.

The rubber composition of the invention may be kneaded using any of various mixing machines commonly used in rubber industry, such as a roll, a pressure kneader, an inter mixer, and a Banbury mixer. The rubber composition of the invention is suitable for use in the production of rubber components for dynamic applications, such as tire treads, rubber vibration isolators, and shoe soles.

### Method for Producing Crosslinked Product

The crosslinked product of the invention, which is a crosslinking reaction product of the crosslinkable rubber composition, may be produced by forming the crosslinkable rubber composition into a desired shape using an extruder, a calender roll, or a press and heating the formed product at 130 °C to 230 °C for 1 minute to 3 hours. A mold may also be used in the crosslinking.

### EXAMPLES

Hereinafter, the invention is more specifically described with reference to some examples and comparative examples. It will be understood that the examples described below are not intended to limit the scope of the invention.

### Production of Rubber Fillers

One hundred parts by weight of silica, which was dried at 130 °C for 24 hours so as to have a volatile matter content of 0 % by weight, was mixed with distilled water and an additive or additives so that the water content and the additive content shown in each of Tables 1 to 4 were achieved, and the resulting mixture was stirred at 600 rpm at room temperature for 15 minutes using a 2 L Henschel mixer (SUPERMIXER PICCOLO, manufactured by KAWATA MFG Co., Ltd.).

Subsequently, bis(triethoxysilylpropyl)tetrasulfide (TESPT) was added to the mixture and stirred at 600 rpm for 45 minutes, so that a filler was obtained. A neutralized filler was obtained by adding, to the filler, zinc white as a neutralizing agent in the amount shown in Table 2.

The silica used as shown in Tables 1 to 3 had a BET specific surface area of 109 m²/g and an apparent average particle size of 10 µm, and the silica used as shown in Table 4 had a BET specific surface area of 214 m²/g and an apparent average particle size of 25 µm. The BET specific surface area was the value in the analysis sheet attached to the purchased silica.

The apparent average particle size was determined using a particle counter (EL • ZONE 280 PC, manufactured by Particle Data Inc.). Based on the amount of silica, the added amount of TESPT was 15 % by weight in the cases shown in Tables 1 to 3 or was as shown in Table 4.

### Evaluation of the Treatment Level of the Fillers

Each of the different fillers produced as described above was evaluated using an extracted amount (solvent-extraction amount (% by weight)) as an indicator of the coupling level of the filler. After the preparation, these fillers were sealed in an aluminized bag and stored in a thermostatic chamber at 23 °C.

After a lapse of one week, the fillers were evaluated. Each (10 g) of the fillers was placed in methyl ethyl ketone (50 g) and vigorously stirred for 10 minutes. The resulting slurry was subjected to filtration under reduced pressure, and the residue was rinsed with methyl ethyl ketone (5 ml x 5 times).

The resulting solution was concentrated under a reduced pressure of 50 mmHg at 70 °C for 20 minutes using a rotary evaporator, and the resulting extracted amount was measured. The larger extracted amount means that the more TESPT remains unreacted, and the smaller extracted amount the better.

**Table 1**

| | Comparative Example 1 | Comparative Example 2 | Comparative Example 3 | Comparative Example 4 | Comparative Example 5 | Comparative Example 6 | Comparative Example 7 |
|---|---|---|---|---|---|---|---|
| Water content (wt%) relative to silica | 0 | 0 | 1.0 | 0.15 | 1.0 | 1.0 | 2.0 |
| Additive | Absent | Stearic acid | Stearic acid | 1 N hydrochloric acid | Potassium oleate | Formalin condensate of sodium melaminesulfonate | Hexanoic acid |
| Additive content (wt%) relative to silica | 0 | 1.0 | 1.0 | 0.15 | 1.0 | 1.0 | 0.5 |
| Extracted amount (wt%) | 10.3 | 9.5 | 8.6 | 10.7 | 10.0 | 9.9 | 8.2 |

**Table 2**

| | Example 1 | Example 2 | Example 3 | Example 4 | Example 5 | Example 6 | Example 7 | Example 8 |
|---|---|---|---|---|---|---|---|---|
| Water content (wt%) relative to silica | 0.5 | 0.5 | 0.5 | 2.0 | 4.0 | 4.7 | 1.0 | 1.0 |
| Additive | L-lactic acid | DL-lactic acid | D-lactic acid | DL-lactic acid | DL-lactic acid | DL-lactic acid | L-lactic acid | L-lactic acid/zinc white |
| Additive content (wt%) relative to silica | 0.1 | 0.1 | 0.1 | 0.5 | 0.5 | 0.5 | 0.5 | 1.0 /0.5 |
| Extracted amount (wt%) | 3.4 | 3.2 | 3.2 | 0.2 | 0.1 | 0.1 | 0.5 | 1.2 |

**Table 3**

| | Example 9 | Example 10 | Example 11 |
|---|---|---|---|
| Water content (wt%) relative to silica | 0.5 | 1.0 | 2.0 |
| Additive | Zinc salt of L-lactic acid | 2,2-dimethyl-3-hydroxypropionic acid | 2-hydroxyisobutylbutyric acid |
| Additive content (wt%) relative to silica | 0.5 | 1.0 | 0.5 |
| Extracted amount (wt%) | 0.2 | 1.1 | 0.2 |

**Table 4**

| | Example 12 | Example 13 | Example 14 |
|---|---|---|---|
| Water content (wt%) relative to silica | 0.5 | 0.5 | 0.5 |
| Additive | DL-lactic acid | DL-lactic acid | DL-lactic acid |
| Additive content (wt%) relative to silica | 0.5 | 0.5 | 0.5 |
| Added amount of TESPT (wt%) | 15 | 17.5 | 20.5 |
| Extracted amount (wt%) | 0.5 | 0.4 | 0.2 |

The results as shown in Tables 1 to 4 show that the extracted amount from the filler of each of Examples 1 to 14, to which a hydroxy acid was added, is significantly smaller than that from the filler containing no additive (Comparative Example 1), containing a fatty acid with no hydroxy group, such as stearic acid (Comparative Example 2 or 3), oleic acid (Comparative Example 5), or hexanoic acid (Comparative Example 7), containing hydrochloric acid (Comparative Example 4), or containing a formalin condensate of sodium melaminesulfonate (Comparative Example 6), which means that silica well reacted with the coupling agent in Examples 1 to 14, and suggests that good dynamic characteristics can be imparted to rubber by the addition of the filler shown in each of Examples 1 to 14. This point is made apparent by the results of the viscoelastic properties test described below.

Fatty acids (aliphatic carboxylic acids) with a small number of carbon atoms (such as acetic acid, butyric acid, hexanoic acid, and other aliphatic carboxylic acids of 1 to 8 carbon atoms, particularly, aliphatic carboxylic acids of 1 to 6 carbon atoms) are not suitable for practical use because of their bad smell or characteristic odor. In contrast, hydroxy acids even with a small number of carbon atoms, such as lactic acid, have no characteristic odor and are also preferred from this point of view.

An inorganic acid such as hydrochloric acid or sulfuric acid is also not preferred because depending on the concentration, it cannot cause silica to react with the coupling agent but can cause coupling agent to react together to form a gel. In addition, when there is no reaction between the coupling agent and silica, the Payne effect, which is caused by the interaction between silanol groups on the surface of silica, does not decrease, so that tan δ may increase, in other words, fuel efficiency may decrease, which is not preferred.

### Rubber Composition Production 1

The components shown in the formulation (I) of Table 5 were kneaded with a 6 inch roll at 40 °C to 50 °C for 30 minutes, based on 200 g of the rubber components. Subsequently, the crosslinking agent components shown in the formulation (II) of Table 5 were added and kneaded for 10 minutes, and then an about 2 mm thick sheet was obtained.

The sheet was crosslinked by heat pressing at 160 °C for 20 minutes, so that a test sample was obtained. The filler was used one week after the preparation, as was used in the evaluation of the treatment level of the filler described above.

**Table 5**

| | Unit (Parts by weight) | | Comparative Example 8 | Example 15 | Example 16 | Example 17 | Example 18 | Example 19 |
|---|---|---|---|---|---|---|---|---|
| Formulation (I) | Styrene-butadiene rubber | *1) | 70 | 70 | 70 | 70 | 70 | 70 |
| | Butadiene rubber | *2) | 30 | 30 | 30 | 30 | 30 | 30 |
| | Filler of Comparative Example 1 | | 67.8 | | | | | |
| | Filler of Example 6 | | | 67.8 | | | | |
| | Filler of Example 7 | | | | 67.8 | | | |
| | Filler of Example 8 | | | | | 67.8 | | |
| | Filler of Example 12 | | | | | | 67.8 | |
| | Filler of Example 14 | | | | | | | 67.8 |
| | Softening agent | *3) | 15 | 15 | 15 | 15 | 15 | 15 |
| | Zinc white | | 4 | 4 | 4 | 4 | 4 | 4 |
| | Stearic acid | | 2 | 2 | 2 | 2 | 2 | 2 |
| | Phenyl-α-naphthylamine | | 1 | 1 | 1 | 1 | 1 | 1 |
| Formulation (II) | Accelerator D | *4) | 2.0 | 2.0 | 2.0 | 2.0 | 2.0 | 2.0 |
| | Accelerator CZ-G | *5) | 1.8 | 1.8 | 1.8 | 1.8 | 1.8 | 1.8 |
| | Sulfur | | 1.5 | 1.5 | 1.5 | 1.5 | 1.5 | 1.5 |

| | | | | | | | | |
|---|---|---|---|---|---|---|---|---|
| *1): SL552 manufactured by JSR Corporation *2): BR01 manufactured by JSR Corporation *3): SUNTHENE 415 manufactured by JAPAN SUN OIL COMPANY, LTD. *4): Diphenylguanidine manufactured by OUCHI SHINKO CHEMICAL INDUSTRIAL CO., LTD. *5): N-cyclohexyl-2-benzylsulfenamide manufactured by OUCHI SHINKO CHEMICAL INDUSTRIAL CO., LTD. | | | | | | | | |

### Viscoelastic Properties Test

A 4 mm wide, 40 mm long, 2 mm thick test piece was punched from the vulcanized sheet and measured for dynamic characteristics (loss tangent: tan δ) under the conditions of an initial load of 1,000 mN, a tensile strain of 10 µm, and a vibration of 10 Hz using DMS 6100 manufactured by Seiko Instruments Inc.

The measurement temperature range was from -20 °C to 80 °C, and the temperature was raised at a rate of 2 °C/minute. The loss tangent value (tan δ) at 60 °C determined by the above measurement method is an indicator of tire rolling resistance, and the smaller loss tangent value the better.

Table 6 shows the results of the test of the examples and the comparative examples obtained by the above production method. Table 7 shows the results of the relative evaluation of Examples 15 to 19, in which Comparative Example 8 was used as a reference (the reference value: 100).

**Table 6**

| | Comparative Example 8 | Example 15 | Example 16 | Example 17 | Example 18 | Example 19 |
|---|---|---|---|---|---|---|
| Tan δ at 60 °C | 0.0533 | 0.0466 | 0.0430 | 0.0431 | 0.0501 | 0.0486 |

**Table 7**

| | Comparative Example 8 | Example 15 | Example 16 | Example 17 | Example 18 | Example 19 |
|---|---|---|---|---|---|---|
| Tan δ at 60 °C | 100 | 87 | 81 | 81 | 94 | 91 |

The tan δ at 60 °C is an indicator of tire rolling resistance, and as this value decreases, the tire can provide higher fuel efficiency. Examples 15 to 19 each show a value smaller than that of Comparative Example 8, which demonstrates that the reaction between silica and the coupling agent is accelerated by the hydroxy acid.

### Rubber Composition Production 2

The components shown in the formulation (I) of Table 8 were kneaded at 150 °C for 6 minutes in a 1.7 L Banbury mixer, based on 650 g of the rubber components, and the mixture was cooled with a 12 inch roll after dumping. Subsequently, the crosslinking agent components shown in the formulation (II) of Table 8 were added and kneaded for 10 minutes, and then an about 2 mm thick sheet was obtained. The sheet was crosslinked by heat pressing at 160 °C for 20 minutes, so that a test sample was obtained.

**Table 8**

| | Unit (Parts by weight) | | Comparative Example 9 | Comparative Example 10 | Example 20 | Example 21 | Example 22 | Example 23 | Example 24 | Example 25 | Example 26 | Example 27 |
|---|---|---|---|---|---|---|---|---|---|---|---|---|
| Formulation (I) | Styrene-butadiene rubber | *6) | 70 | 70 | 70 | 70 | 70 | 70 | 70 | 70 | 70 | 70 |
| | Butadiene rubber | *7) | 30 | 30 | 30 | 30 | 30 | 30 | 30 | 30 | 30 | 30 |
| | Silica | *8) | 80 | 80 | 80 | 80 | 80 | 80 | 80 | 80 | 80 | 80 |
| | Softening agent | *9) | 20 | 20 | 20 | 20 | 20 | 20 | 20 | 20 | 20 | 20 |
| | Zinc white | | 4 | 4 | 4 | 4 | 4 | 4 | 4 | 4 | 4 | 4 |
| | Stearic acid | | 2 | 2 | 2 | 2 | 2 | 2 | 2 | 2 | 2 | 2 |
| | Hexanoic acid | | | 2 | | | | | | | | |
| | L-lactic acid (90% aqueous solution) | | | | 0.1 | 1 | 5 | | | | | |
| | DL-lactic acid (90% aqueous solution) | | | | | | | 1 | | | | |
| | D-lactic acid (90% aqueous solution) | | | | | | | | 1 | | | |
| | Citric acid (50% aqueous solution) | | | | | | | | | 2 | | |
| | Malic acid (50% aqueous solution) | | | | | | | | | | 2 | |
| | Salicylic acid | | | | | | | | | | | 1 |
| | Silane coupling agent *10) | | 7.2 | 7.2 | 7.2 | 7.2 | 7.2 | 7.2 | 7.2 | 7.2 | 7.2 | 7.2 |
| | Phenyl-α -naphthylamine | | 1 | 1 | 1 | 1 | 1 | 1 | 1 | 1 | 1 | 1 |
| Form ulation (II) | Accelerator D | *11) | 2.0 | 2.0 | 2.0 | 2.0 | 2.0 | 2.0 | 2.0 | 2.0 | 2.0 | 2.0 |
| | Accelerator CZ-G | *12) | 1.8 | 1.8 | 1.8 | 1.8 | 1.8 | 1.8 | 1.8 | 1.8 | 1.8 | 1.8 |
| | Sulfur | | 1.5 | 1.5 | 1.5 | 1.5 | 1.5 | 1.5 | 1.5 | 1.5 | 1.5 | 1.5 |

| | | | | | | | | | | | | |
|---|---|---|---|---|---|---|---|---|---|---|---|---|
| *6): SL552 manufactured by JSR Corporation *7): BR01 manufactured by JSR Corporation *8): Nipsil AQ manufactured by Tosoh Silica Corporation *9): SUNTHENE 415 manufactured by JAPAN SUN OIL COMPANY, LTD. *10): CABRUS-4 manufactured by DAISO CO., LTD. *11): Diphenylguanidine manufactured by OUCHI SHINKO CHEMICAL INDUSTRIAL CO., LTD. *12): N-cyclohexyl-2-benzylsulfenamide manufactured by OUCHI SHINKO CHEMICAL INDUSTRIAL CO., LTD. | | | | | | | | | | | | |

Table 9 shows the results of the test of the examples and the comparative examples obtained by the above production method. Table 10 shows the results of the relative evaluation of Comparative Example 10 and Examples 20 to 27, in which Comparative Example 9 was used as a reference (the reference value: 100).

**Table 9**

| | Comparative Example 9 | Comparative Example 10 | Example 20 | Example 21 | Example 22 | Example 23 | Example 24 | Example 25 | Example 26 | Example 27 |
|---|---|---|---|---|---|---|---|---|---|---|
| Tan δ at 60 °C | 0.0779 | 0.0827 | 0.0744 | 0.0683 | 0.0717 | 0.0649 | 0.0650 | 0.0715 | 0.0656 | 0.0683 |

**Table 10**

| | Comparative Example 9 | Comparative Example 10 | Example 20 | Example 21 | Example 22 | Example 23 | Example 24 | Example 25 | Example 26 | Example 27 |
|---|---|---|---|---|---|---|---|---|---|---|
| Tan δ at 60 °C | 100 | 106 | 96 | 88 | 92 | 83 | 83 | 92 | 84 | 88 |

Table 9 shows that the tan δ value at 60 °C of each of Examples 20 to 27, in which a hydroxy acid was added, was smaller than that of a case where no hydroxy acid was added (Comparative Example 9) or a case where hexanoic acid, a fatty acid, was used in place of the hydroxy acid (Comparative Example 10), which indicates that Examples 20 to 27 have good dynamic characteristics.

This suggests that the reaction between silica and the coupling agent is accelerated by the hydroxy acid not only when the filler in which silica has previously reacted with the silane coupling agent is added to rubber (Examples 15 to 19) but also when a filler and a coupling agent are added to form a rubber composition by so-called integral blending (Examples 20 to 27).

### INDUSTRIAL APPLICABILITY

According to the invention, the coupling agent can be sufficiently active in the rubber filler or rubber composition containing lactic acid, so that kneading methods simpler than conventional ones can be provided and that good dynamic characteristics can be presented. Therefore, the invention is suitable for use in the production of rubber components for dynamic applications, such as tire treads, rubber vibration isolators, and shoe soles.

## Claims

1. A filler composition for rubber, comprising:
100 parts by weight of a silica-based filler;
2 to 25 parts by weight of a silane coupling agent; and
0.1 to 10 parts by weight of lactic acid.

2. The filler composition for rubber according to claim 1,
wherein the silane coupling agent is a polysulfide silane coupling agent represented by Formula [I]:
(R¹-O)_{3-Y}R¹_{Y}-Si-R²-Sₓ-R²-Si-R¹_{Y}(O-R¹)_{3-Y} ..... [I],
wherein R¹ is a monovalent hydrocarbon group of 1 to 18 carbon atoms,
R² is a divalent hydrocarbon group of 1 to 9 carbon atoms,
X is from 2 to 6, and Y is an integer of 0, 1, or 2.

3. The filler composition for rubber according to any one of claims 1 or 2, wherein the silica-based filler is wet silica with a BET specific surface area of 20 to 250 m²/g, more preferably 50 to 200 m²/g.

4. A filler for rubber, comprising a product obtained by reaction between the silica-based filler and the coupling agent in the filler composition for rubber according to any of claims 1 to 3.

5. A rubber composition, comprising:
100 parts by weight of a diene rubber; and
5 to 120 parts by weight of the filler according to claim 4.

6. A crosslinkable rubber composition, comprising:
the rubber composition according to claim 5; and
a crosslinking agent.

7. A crosslinked product,
comprising a crosslinking reaction product of the crosslinkable rubber composition according to claim 6.

8. A tire comprising the crosslinked product according to claim 7.

9. A rubber vibration isolator
comprising the crosslinked product according to claim 7.

## Patentansprüche

1. Füllstoffzusammensetzung für Kautschuk, die Folgendes aufweist:
- 100 Gewichtsteile eines Füllstoffs auf Siliciumdioxidbasis;
- 2 bis 25 Gewichtsteile eines Silanhaftvermittlers; und
- 0,1 bis 10 Gewichtsteile Milchsäure.

2. Füllstoffzusammensetzung für Kautschuk nach Anspruch 1,
wobei der Silanhaftvermittler ein durch die Formel [I] dargestellter Polysulfidsilanhaftvermittler ist:
(R¹-O)_{3-Y}R¹_{Y}-Si-R²- Sₓ-R²-Si-R¹_{Y}(O-R¹)_{3-Y} ... [I],
wobei
R¹ eine einwertige Kohlenwasserstoffgruppe mit 1 bis 18 Kohlenstoffatomen ist,
R² eine zweiwertige Kohlenwasserstoffgruppe mit 1 bis 9 Kohlenstoffatomen ist,
X Eine Zahl von von 2 bis 6 ist, und
Y eine ganze Zahl von 0, 1 oder 2 ist.

3. Füllstoffzusammensetzung für Kautschuk nach einem der Ansprüche 1 oder 2, wobei der Füllstoff auf Siliciumdioxidbasis nasses Siliciumdioxid mit einer spezifischen BET-Oberfläche von 20 bis 250 m²/g, bevorzugter 50 bis 200 m²/g, ist.

4. Füllstoff für Kautschuk, der ein Produkt aufweist, das durch eine Reaktion zwischen dem Füllstoff auf Siliciumdioxidbasis und dem Haftvermittler in der Füllstoffzusammensetzung für Kautschuk nach einem der Ansprüche 1 bis 3 erhalten wird.

5. Kautschukzusammensetzung, die Folgendes aufweist:
- 100 Gewichtsteile eines Dienkautschuks; und
- 5 bis 120 Gewichtsteile des Füllstoffs gemäß Anspruch 4.

6. Vernetzbare Kautschukzusammensetzung,
die Folgendes aufweist:
- eine Kautschukzusammensetzung gemäß Anspruch 5; und
- ein Vernetzungsmittel.

7. Vernetztes Produkt,
das ein Vernetzungs-Reaktionsprodukt der vernetzbaren Kautschukzusammensetzung nach Anspruch 6 aufweist.

8. Reifen,
der das vernetzte Produkt nach Anspruch 7 aufweist.

9. Gummivibrationsisolator,
der das vernetzte Produkt nach Anspruch 7 aufweist.

## Revendications

1. Composition de charge pour caoutchouc comprenant :
- 100 parties en poids d'une charge à base de silice ;
- 2 à 25 parties en poids d'un agent de couplage au silane ; et
- 0,1 à 10 parties en poids d'acide lactique.

2. Composition de charge pour caoutchouc selon la revendication 1,
dans laquelle l'agent de couplage au silane est un agent de couplage au poly(sulfure de silane) représenté par la formule [I] :
(R¹-O)_{3-Y}R¹_{Y}-Si-R²-S_{X}-R²-Si-R¹_{Y}(O-R¹)_{3-Y} ... (I)
dans laquelle
R¹ est un groupe hydrocarboné monovalent de 1 à 18 atomes de carbone,
R² est un groupe hydrocarboné divalent de 1 à 9 atomes de carbone,
X vaut de 2 à 6, et Y est un entier 0, 1 ou 2.

3. Composition de charge pour caoutchouc
selon l'une quelconque des revendications 1 ou 2,
dans laquelle la charge à base de silice est de la silice humide ayant une surface spécifique BET de 20 à 250 m²/g, mieux encore de 50 à 200 m²/g.

4. Charge pour caoutchouc, comprenant un produit obtenu par une réaction entre la charge à base de silice et l'agent de couplage dans la composition de charge pour caoutchouc selon l'une quelconque des revendications 1 à 3.

5. Composition de caoutchouc comprenant :
- 100 parties en poids d'un caoutchouc diène ; et
- 5 à 120 parties en poids de la charge selon la revendication 4.

6. Composition de caoutchouc réticulable comprenant :
- la composition de caoutchouc selon la revendication 5 ; et
- un agent de réticulation.

7. Produit réticulé,
comprenant un produit de la réaction de réticulation de la composition de caoutchouc réticulable selon la revendication 6.

8. Pneumatique comprenant le produit réticulé selon la revendication 7.

9. Isolateur de vibrations en caoutchouc comprenant le produit réticulé selon la revendication 7.
